# EUROPEAN PATENT SPECIFICATION

(11) **EP 3 125 677 B1**
(45) Date of publication and mention of the grant of the patent: **16.05.2018**
(21) Application number: 15715473.3
(22) Date of filing: 06.03.2015
(51) Int. Cl.: A01J 5/003, A01J 5/017

(54) **MILKING DEVICE COMPRISING A TILTABLE MILKING CUP HOLDER**
MELKVORRICHTUNG MIT KIPPBAREM MELKBECHERHALTER
DISPOSITIF DE TRAITE COMPRENANT UN SUPPORT DE GOBELET TRAYEUR INCLINABLE

(30) Priority: 01.04.2014 NL 2012539; 07.04.2014 NL 2012576
(43) Date of publication of application: 08.02.2017
(73) Proprietor: Lely Patent N.V., 3147 PB Maassluis (NL)
(72) Inventor: REGELINK, Frank Gerard, NL-3147 PB Maassluis (NL); VAN DEN BERG, Karel, NL-3147 PB Maassluis (NL); VAN ADRICHEM, Paulus Jacobus Maria, NL-3147 PB Maassluis (NL)
(74) Representative: Octrooibureau Van der Lely N.V.
(86) International application number: PCT/NL2015/050145
(87) International publication number: WO 2015/152709

(56) References cited:
- EP-A1- 0 360 354
- EP-A1- 0 611 004
- WO-A1-2008/030086
- NL-C2- 1 032 433

## Description

The invention relates in general to a milking device.

The invention relates in particular to a milking device, comprising: a frame fitted with at least one milking cup holder with a milking cup which is movable in a direction away from the milking cup holder, and a return device having a return means connected to the milking cup and which is configured to bring about the return of the milking cup to the milking cup holder from a position in which it has been moved away from the milking cup holder, wherein the milking cup holder is tiltable with respect to the frame between a connecting position for retaining the milking cup in an effective orientation for connecting it to a teat of an animal to be milked and a tilted rest position, and wherein the return device is configured to exert a force on the milking cup holder via the return means in order to tilt the milking cup holder.

Such a milking device is known, for example from NL-1032433-C. The known milking device comprises an intermediate arm which is connected to the frame and to the milking cup holder and has a first joint and a second joint around which the milking cup holder and the intermediate arm, respectively, are tiltable by means of the return means, as well as a spring which is coupled to the milking cup holder and the frame, and optionally to the intermediate arm. Such a milking device provides the possibility to tilt the milking cup, via the milking cup holder. The milking cup holder is configured when in a connecting position, to accommodate the milking cup in a substantially vertical orientation, based on a normal, operational position of the milking device. A tilted rest position is then a position in which the milking cup has preferably in any event reached a substantially horizontal orientation. In principle, it is then not possible for any dirt, for example dirt from the animal to be milked, to fall into the milking cup from above.

By using the intermediate arm with the two joints, a two-step tilt of the milking cup holder comprising the milking cup is achieved, wherein the tilt can take place in two stages, namely a first phase in which the milking cup is lowered slightly, and a second phase in which the desired final orientation of the milking cup is achieved, over a second tilting point. Just like the return device, the spring functions to tilt the milking cup holder, wherein the spring can perform this function when the return means is brought into a stress-free state.

Despite the fact that the known milking device works well per se, there is a need to provide an alternative milking device, in which it is, for example, not necessary to use a configuration which is aimed at achieving a tilting movement of the milking cup holder in two stages. The invention meets said need by providing a milking device which comprises a magnet means comprising both a component which is fitted to the frame and a component which is fitted to the milking cup holder, which magnet means is configured to exert a magnetic force in order to fix the milking cup holder in the connecting position with respect to the frame.

The use of a magnet means in the milking device has a number of advantages. The first advantage which may be mentioned is the fact that no complicated construction using, for example, an intermediate arm is required in order to tilt the milking cup holder. Instead, the milking cup holder may be fitted to the frame so as to be directly hingeable. The second advantage which may be mentioned is the fact that, in the connecting position, the milking cup holder is held in an operationally reliable manner with respect to the frame under the effect of the magnet means. In this way, it is possible to ensure a correct connection of the milking cup to the teat of a dairy animal which can be maintained for as long as is necessary for the milking operation. The magnet means is highly suitable for use as a locking means. Since it can only exert a magnetic force over a limited range, the milking device is preferably designed in such a way that, in the connecting position, the components of the magnet means are within each other's sphere of influence, whereas this is not important in other positions of the milking cup holder.

At least one of the components of the magnet means may comprise a permanent magnet. However, it is also possible, within the scope of the invention, for at least one of the components of the magnet means to comprise an electromagnet. An advantage of the use of a permanent magnet is that no electricity is required to achieve the desired magnet action. An advantage of the use of an electromagnet is that the magnet action can be cancelled whenever this is desired, which is in particular the case in a situation where the milking cup holder is to be tilted from the connecting position to the rest position. When using a permanent magnet, it is practical, in view of such a situation, if the return device is configured to exert a force on the milking cup holder via the return means which is sufficiently large to overcome the magnetic force fixing the the milking cup holder in position. It may be the case, for example, that the return device comprises a pulling body and a drive means for driving the pulling body, and that the drive means is configured to exert a pulling force on the pulling body which is sufficiently large to overcome the magnetic force fixing the the milking cup holder in position.

In case at least one of the components of the magnet means comprises an electromagnet, it is advantageous for the milking device to comprise a control device for controlling a state of the electromagnet, wherein the control device is configured to cancel an energization of the electromagnet when a force is exerted on the milking cup holder via the return means while the milking cup is situated in the milking cup holder and the milking cup holder is in the connecting position. The milking cup holder can then be tilted from the connecting position to the rest position, without a magnetic force having to be overcome in this case. The force exerted by the return means on the milking cup holder can thus be lower than would be the case if the magnetic force had not been cancelled, which would be the case, for example, when using a permanent magnet. For a practical operation, the control device may be coupled to means which are suitable for determining the moment when the situation arises where the magnet action of the electromagnet has to be cancelled, such as one or more sensors, a force meter or the like. It is possible, for example, to opt for measuring the current through the drive means of the return device.

For an effective operation of the magnet means, it is advantageous if at least one of the components of the magnet means has a self-aligning configuration. This component can then align itself with respect to the other component in such a way that, in the connecting position of the milking cup holder, the components adjoin one another as closely as possible, which is important since a small gap between the components, for example a gap of 1 mm, may already adversely affect the performance. With a view to the desired close adjoinment of the components of the magnet means in the connecting position, it is also advantageous when sides of the components of the magnet means which face one another in the connecting position of the milking cup holder are at least in part provided with a relief, in which case the relief on the side of the one component is complementary to the relief on the side of the other component. The risk of a gap being present in practice between said sides of the components is smaller than would be the case if these were completely flat.

Sides of the components of the magnet means which face one another in the connecting position of the milking cup holder may at least in part be provided with a self-cleaning material. In general, preventing the components of the magnet means from becoming dirty is desirable in order to ensure effective operation of the latter.

Different from what is the case with the milking device known from NL-1032433-C, the milking device according to the invention uses only a single joint about which the milking cup holder is tiltable with respect to the frame. The configuration which makes the desired tilting movement of the milking cup holder possible may therefore be of a simpler design.

If the connecting position is associated with a stress-free state of the return means and the tilted rest position with a stressed state of the return means, it is advantageous for the milking device to be provided with a milking cup holder positioning means which is coupled to the milking cup holder and the frame for exerting a force on the milking cup holder which is aimed at returning the milking cup holder from the rest position to the connecting position. The milking cup holder positioning means is optional since the milking cup holder usually already has a tendency to tilt from the rest position to the connecting position, at least on the basis of the stiffness of a milk line which is connected to the milking cup for discharging milk obtained by means of the milking cup. The force which is exerted by the milk line on the milking cup holder when it is in the rest position may, however, be insufficient to ensure a return tilt of the milking cup holder. With a view thereto, it is advantageous to make use of a separate milking cup holder positioning means.

In a practical embodiment, the milking cup holder positioning means comprises a spring means. This spring means may, for example, comprise a component made from a flexible material which preferably forms a connection between the milking cup holder and the frame. Compared to, for example, a coil spring, such a flexible component has the advantage that it may be a closed unit and is thus practically impervious to dirt. The use of a flexible component also results in a relatively simple construction. Furthermore, the use of a flexible component may be advantageous with a view to a possible overload situation exerted via the milking cup, in which case damage to the milking cup is prevented by the fact that the component can yield.

The milking device according to the invention preferably comprises a plurality of milking cup holders which each comprise a milking cup, a return means and a magnet means. The number of milking cup holders may be, for example, four.

The frame of the milking device may be mobile, in particular autonomously mobile. Another conceivable option is for the milking device to be configured as a fixedly arranged device. The frame is then, for example, a movable frame, such as a robot arm.

The milking device may furthermore comprise means which are known per se and which are suitable for use with a milking device, such as a teat detection means, a teat cleaning means and/or a milking cup cleaning means.

The invention will be explained below with reference to the drawing, which shows some non-limiting illustrative embodiments of the invention, in which identical reference numerals indicate identical or similar components, and in which:

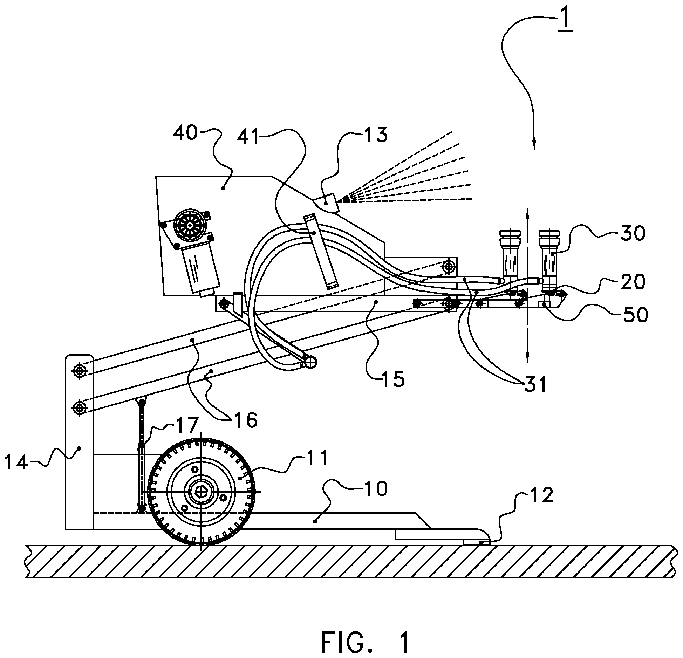

Figure 1 is a diagrammatic side view of an embodiment of the milking device according to the invention, comprising a frame with a number of milking cup holders arranged thereon, each comprising a milking cup which is movable in a direction away from the milking cup holder;

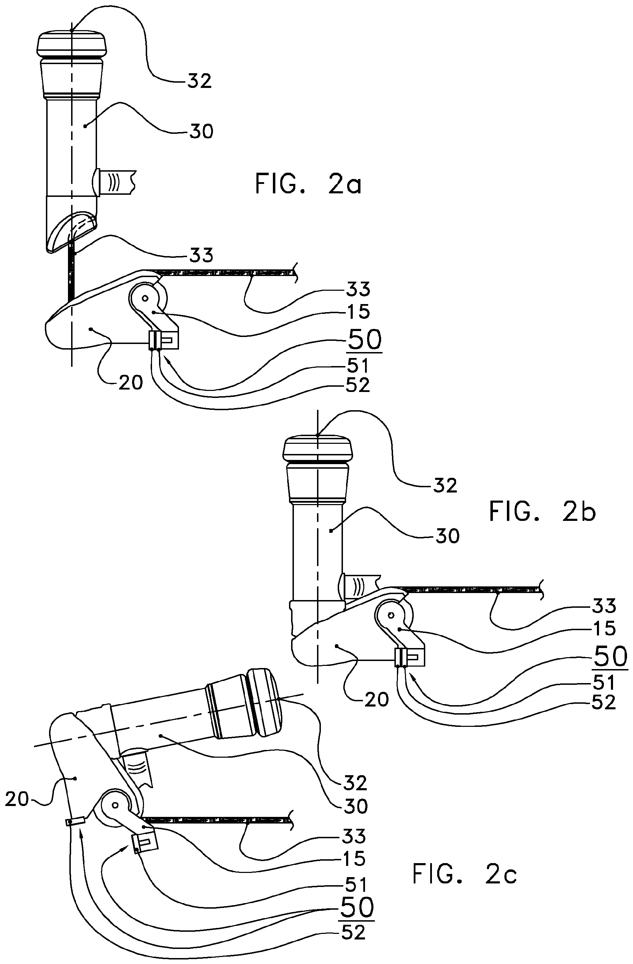

Figures 2a, 2b and 2c are three successive steps of a process in which a milking cup is returned to the milking cup holder from a position in which it has been moved away from a milking cup holder, and in which the milking cup holder comprising the milking cup is subsequently tilted from a connecting position to a rest position;

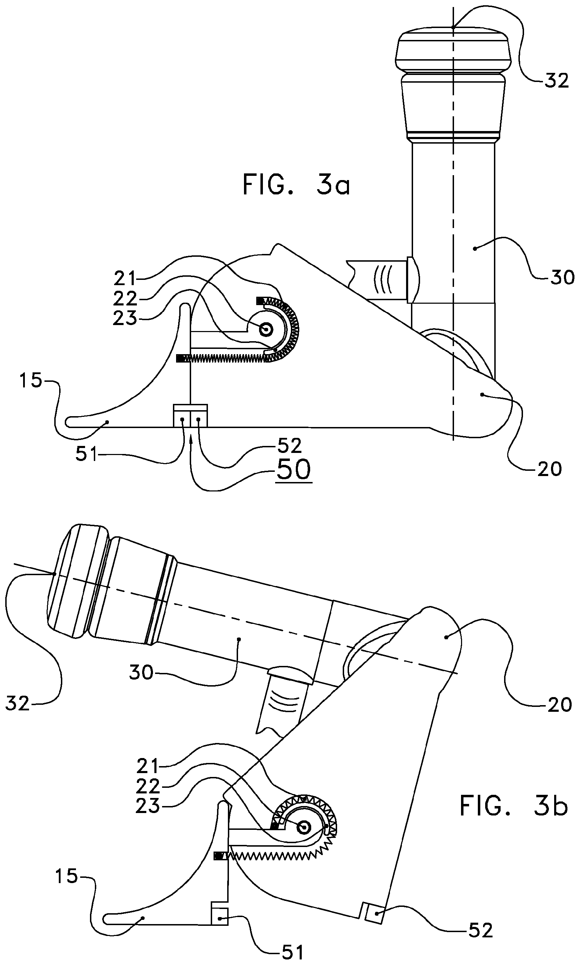

Figures 3a and 3b are diagrammatic side views in the non-tilted and tilted position, respectively, of a milking cup holder, a section of the frame to which the milking cup holder is hingedly connected, and a first embodiment of a milking cup holder positioning means which is coupled to the milking cup holder and the frame; and

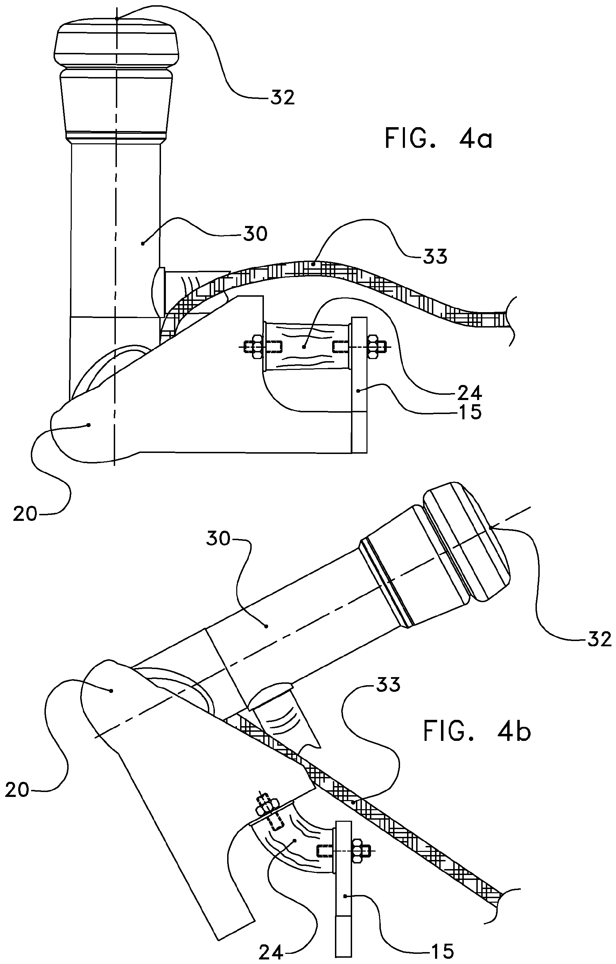

Figures 4a and 4b are diagrammatic side views in the non-tilted and tilted position, respectively, of a milking cup holder, a section of the frame to which the milking cup holder is hingedly connected, and a second embodiment of a milking cup holder positioning means which is connected to the milking cup holder and the frame.

Figure 1 shows an embodiment of the milking device 1 according to the invention, comprising a frame 10 with a number of milking cup holders 20 arranged thereon, each comprising a milking cup 30 which is movable in a direction away from the milking cup holder 20. The total number of milking cup holders 20 and associated milking cups 30 is four in this case, two of which are visible in the figure. The milking device 1 is intended to be used for milking an animal, in which case the milking cups 30 are attached to teats of the dairy animal. A milk line 31 is connected to each of the milking cups 30 for discharging the milk obtained by means of the milking cups 30 during a milking to a milk depot (not shown). The milk depot may form part of the milking device 1 or may, for example, comprise a separate milk tank having a fixed configuration.

In the illustrated example, the frame 10 of the milking device 1 is provided with wheels 11 and a sliding shoe 12, so that the milking device 1 is autonomously mobile and can therefore be moved to a position as far as underneath the teats of an animal to be milked. In order for the process in which the milking cups 30 are attached to the teats to progress correctly, the milking device 1 is provided with a teat detection camera 13 which is connected to a control means (not shown) of the milking device 1.

In the illustrated example, the frame 10 furthermore comprises a part 14 which is upright with respect to the wheels 11 and the sliding shoe 12, a carrier part 15 for supporting the milking cup holders 20 comprising the milking cups 30, as well as a housing 40, a parallelogram construction 16 for joining the upright part 14 and the carrier part 15, and a height adjustment unit with a piston/cylinder device 17. The housing 40 has a function in supporting the teat detection camera 13 and, in addition, in accommodating components which are configured to produce vacuum forces in the milking cups 30 during a milking operation. Such components are known per se and will not be explained further in this text. Brackets 41 are provided on the housing 40 for guiding the milk lines 31. The piston/cylinder device 17 has a function in controlling the parallelogram construction 16 and is to this end connected to one or two parallel rods of the parallelogram construction 16. By pushing the piston of the piston/cylinder device 17 in and out, the rods of the parallelogram construction 16 turn and the height position of the carrier part 15 is varied. This is desirable in order to be able to attach the milking cups 30 to the teats of an animal to be milked at different heights (of the udder). Incidentally, it is possible to use another device instead of the piston/cylinder device 17 for controlling the parallelogram construction 16, for example a device having an electric motor.

The milking cup holders 20 are arranged on the carrier part 15 so as to be tiltable. In Figure 1, the milking cup holders 20 are shown in a connecting position. In this position, the milking cup holders 20 are able to retain the associated milking cups 30 in an operational orientation, which orientation is a substantially vertical orientation in the illustrated example. The milking cup holders 20 and the carrier part 15 are provided with components 51, 52 of a magnet means 50, in which case the positioning of the components 51, 52 on both the milking cup holders 20 and the carrier part 15 is designed to secure the connecting position of the milking cup holders 20 on account of the action of magnetic forces between the components 51, 52. In particular, the positioning of the components 51, 52 of each magnet means 50 is chosen in such a way that the components 51, 52 are in each area of activity due to the fact that the components 51, 52 adjoin one another or are only a small distance apart when the milking cup holders 20 are in the connecting position. The milking cup holders 20 may, for example, be provided with a permanent magnet, while the carrier part 15 may be provided with pieces of magnetic metal in suitable locations for interaction with the magnets of the milking cup holders 20. Conversely, it is possible for the milking cup holders 20 to comprise pieces of magnetic material, while the carrier part 15 is provided with permanent magnets. It is also possible to use electromagnets as at least one of the components 51, 52 of the magnet means 50 of each of the combinations of the milking cup holders 20 and an adjoining section of the carrier part 15. The milking cup holders 20 can be brought from the connecting position to a tilted rest position if no milking operation is taking place, as will be explained further below with reference to Figures 2a, 2b and 2c, in which the operation of the magnet means 50 between the milking cup holders 20 and the carrier part 15 will be explained further.

Figures 2a, 2b and 2c illustrate three successive steps of a process in which a milking cup 30 is returned to the milking cup holder 20 from a position in which it has been moved away from a milking cup holder 20, and in which the milking cup holder 20 containing the milking cup 30 is then tilted from the connecting position to the rest position.

Figure 2a shows the situation in which the milking cup 30 has been moved away from the milking cup holder 20. This situation occurs during a milking operation, when the milking cup 30 is attached to a teat of an animal to be milked. The milking cup 30 can then freely move along with the teat, which is important because the dairy animal may move during the milking operation. The milking cup 30 has a substantially vertical orientation, in which an opening 32 of the milking cup 30 has a top position, so that the milking cup 30 is able to receive the teat below the dairy animal.

When the milking operation has finished, the milking cup 30 is removed from the teat and initially returned to the milking cup holder 20. The situation in which the milking cup 30 is still oriented substantially vertically, but is already held in the milking cup holder 20, is illustrated in Figure 2b. In this situation, the milking cup holder 20 is in the position which has been referred to as the connecting position above.

It is not desirable for the milking cup 30 to constantly be in a substantially vertical orientation, since it is then readily possible for dirt, in particular dirt originating from the dairy animal, to enter the milking cup 30. Therefore, the milking cup 30 is not only returned to the milking cup holder 20 after a milking operation, but the milking cup holder 20 is then tilted to assume a rest position, in which case the milking cup 30 tilts together with the milking cup holder 20 until the milking cup 30 has a substantially horizontal orientation, as is illustrated in Figure 2c. In this orientation, the opening 32 of the milking cup 30 is in a lateral position, so that it is practically impossible for dirt to still reach the milking cup 30.

In order to return the milking cup 30 to the milking cup holder 20 and to tilt the milking cup holder 20 with the milking cup 30 accommodated therein, the milking device 1 is provided with a return means which, in the illustrated example, comprises a drawstring 33. On one side, the drawstring 33 is connected to a bottom portion of the milking cup 30 and, on the other side, to a means which is configured to exert a pulling force on the drawstring 30 and which is also able to ease the drawstring 33, for example a motor-driven winding drum (not shown). In the situation in which the milking cup 30 is attached to a teat of a dairy animal, the drawstring 33 is held in a stress-free state, in other words, no pulling force is exerted on the milking cup 30 by the drawstring 33, so that there is no risk of the milking cup 30 being inadvertently pulled off the teat. If the milking cup 30 can be moved away from the teat and returned to the milking cup holder 20, this is achieved by tensioning the drawstring 33, as a result of which a pulling force is exerted on the milking cup 30 by the drawstring 33 which is sufficiently large to produce the desired movement of the milking cup 30. In order to receive the milking cup 30, the milking cup holder 20 is situated in the connecting position, which is secured by means of the magnet means 50, as described above. When the milking cup 30 is situated in the milking cup holder 20, the milking cup holder 20 comprising the milking cup 30 can then be tilted by pulling in the drawstring 33 further. In a situation in which the operation of the magnet means 50 is based on using a permanent magnet, the pulling force can in this case be increased to such a degree that the components 51, 52 of the magnet means 50 can be moved apart. In a situation in which the operation of the magnet means is based on using an electromagnet, the electromagnet can be switched off at the point in time when the desired tilting movement has to start, so that the pulling force only has to be increased to a lesser degree or even not at all.

When the milking cup holder 20 with the milking cup 30 accommodated therein is in the rest position and it is desirable to carry out a milking operation, the drawstring 33 is first eased, so that the milking cup holder 20 comprising the milking cup 30 can move back to the connecting position. During the process of attaching the milking cup 30 to the teat of an animal to be milked, it is particularly advantageous if the milking cup holder 20 is fixed in the connecting position on account of magnetic forces, since an unintended tilt of the milking cup 30 is then prevented.

It follows from the above, that it is sufficient if the return means comprise, for example, a single drawstring 33. On the basis of the above-described connection between the carrier part 15, the milking cup holder 20 and the milking cup 30, it is possible to achieve all possible positions of the milking cup holder 20 with respect to the carrier part 15 and all possible positions of the milking cup 30 with respect to the milking cup holder 20 by means of a single drawstring 33. Therefore, no complicated operating structure is required in the milking device 1, which contributes to a maintenance-free and long-lasting character of the milking device 1.

In order to assist the movement of the milking cup holder 20 from the rest position back to the connecting position, a milking cup holder positioning means which is suitable for this purpose may be provided. Figures 3 and 4 show two possible embodiments of such a means. In both cases, it is a flexible means, in particular a spring means. Figures 3a and 3b illustrate the possibility of the use of a coil spring 21 which extends between, on one side, an attachment point on the milking cup holder 20 and, on the other side, an attachment point on the carrier part 15. In order to ensure efficient operation of the coil spring 21, it is advantageous if the coil spring 21 is passed around the tilting point 22 of the milking cup holder 20 with respect to the carrier part 15. To this end, a curved guide 23 may be provided, as can be seen in Figure 3a, b. Figures 4a and 4b illustrate the possibility of the use of at least one rod-shaped component 24 which may be made, for example, of rubber. In the connecting position of the milking cup holder 20 in Figure 4a, the component 24 may have a straight shape and extend in a substantially horizontal direction, while the component 24 in the rest position of the milking cup holder 20 may be curved, as is illustrated in Figure 4b. The support of the return movement from the rest position to the connecting position when easing the drawstring 33 is then based on a natural tendency of the component 24 to reassume its straight shape.

With regard to the tilting point 22 of the milking cup holder 20 with respect to the carrier part 15, it should be noted that, in the illustrated example, this is situated in a position which is located next to the bottom portion of the milking cup 30 in the situation in which the milking cup 30 is accommodated in the milking cup holder 20. This has the advantage that a low connection to a teat of an animal to be milked is possible. If the tilting point 22 were situated in a position which is located below the bottom portion of the milking cup 30 in said situation, which is readily possible from the point of view of construction, the assembly of the carrier part 15, the milking cup holder 20 and the milking cup 30 would definitely take up more space in the height direction.

For the sake of completeness, it should be noted that the frame 10, 14, 15, 16 of the milking device 1 in the illustrated example is autonomously displaceable. This does not alter the fact that, within the scope of the invention, an embodiment of the milking device 1 is possible in which this is arranged in a fixed position, and in which the frame 10, 14, 15, 16 functions as a moveable robot arm.

It will be clear to a person skilled in the art that the scope of the invention is not limited to the examples discussed above, but that various variations and modifications thereof are possible without departing from the scope of the invention as defined in the attached claims.

## Claims

1. A milking device (1), comprising:
a frame (10, 14, 15, 16) fitted with at least one milking cup holder (20) with a milking cup (30) which is movable in a direction away from the milking cup holder (20), and
a return device having a return means (33) connected to the milking cup (30) and which is configured to bring about the return of the milking cup (30) to the milking cup holder (20) from a position in which it has been moved away from the milking cup holder (20),
wherein the milking cup holder (20) is tiltable with respect to the frame (10, 14, 15, 16) between a connecting position for retaining the milking cup (30) in an effective orientation for connecting it to a teat of an animal to be milked and a tilted rest position, and
wherein the return device is configured to exert a force on the milking cup holder (20) via the return means (33) in order to tilt the milking cup holder (20), and
wherein the milking device (1) furthermore comprises a magnet means (50) comprising both a component (51) which is fitted to the frame (10, 14, 15, 16) and a component (52) which is fitted to the milking cup holder (20), which magnet means (50) is configured to exert a magnetic force in order to fix the milking cup holder (20) in the connecting position with respect to the frame (10, 14, 15, 16).

2. The milking device (1) as claimed in claim 1, wherein at least one of the components (51, 52) of the magnet means (50) comprises a permanent magnet.

3. The milking device (1) as claimed in claim 2, wherein the return device is configured to exert a force on the milking cup holder (20) via the return means (33) which is sufficiently large overcome the magnetic force fixing the the milking cup holder (20) in position.

4. The milking device (1) as claimed in claim 1, wherein at least one of the components (51, 52) of the magnet means (50) comprises an electromagnet.

5. The milking device (1) as claimed in claim 4, comprising a control device for controlling a state of the electromagnet, wherein the control device is configured to cancel an energization of the electromagnet when a force is exerted on the milking cup holder (20) via the return means (33) while the milking cup (30) is situated in the milking cup holder (20) and the milking cup holder (20) is in the connecting position.

6. The milking device (1) as claimed in any of claims 1-5, wherein at least one of the components (51, 52) of the magnet means (50) has a self-aligning configuration.

7. The milking device (1) as claimed in any of claims 1-6, wherein sides of the components (51, 52) of the magnet means (50) which face one another in the connecting position of the milking cup holder (20) are at least in part provided with a relief, and wherein the relief on the side of the one component (51) is complementary to the relief on the side of the other component (52).

8. The milking device (1) as claimed in any of claims 1-7, comprising a single joint (22) about which the milking cup holder (20) is tiltable with respect to the frame (10, 14, 15, 16).

9. The milking device (1) as claimed in any of claims 1-8, comprising a milking cup holder positioning means (21, 24) which is coupled to the milking cup holder (20) and the frame (10, 14, 15, 16) for exerting a force on the milking cup holder (20) which is aimed at returning the milking cup holder (20) from the tilted rest position to the connecting position.

10. The milking device (1) as claimed in claim 9, wherein the milking cup holder positioning means comprises a spring means (21, 24).

11. The milking device (1) as claimed in claim 10, wherein the spring means comprises a component (24) made from a flexible material.

## Patentansprüche

1. Melkvorrichtung (1), umfassend:
einen Rahmen (10, 14, 15, 16), der mit wenigstens einem Melkbecherhalter (20) mit einem Melkbecher (30), der in einer Richtung weg von dem Melkbecherhalter (20) bewegbar ist, ausgerüstet ist und
eine Rückführvorrichtung, die ein Rückführmittel (33), das mit dem Melkbecher (30) verbunden ist, aufweist und die dazu ausgelegt ist, die Rückführung des Melkbechers (30) aus einer Stellung, in der er von dem Melkbecherhalter (20) weg bewegt worden ist, zu dem Melkbecherhalter (20) zu bewirken,
wobei der Melkbecherhalter (20) in Bezug auf den Rahmen (10, 14, 15, 16) zwischen einer Befestigungsstellung, in der der Melkbecher (30) in einer effektiven Ausrichtung zum Befestigen desselben an einer Zitze eines zu melkenden Tiers gehalten wird, und einer gekippten Ruhestellung kippbar ist und
wobei die Rückführvorrichtung dazu ausgelegt ist, eine Kraft auf den Melkbecherhalter (20) über das Rückführmittel (33) auszuüben, um den Melkbecherhalter (20) zu kippen, und
wobei die Melkvorrichtung (1) ferner ein Magnetmittel (50) umfasst, das sowohl eine an dem Rahmen (10, 14, 15, 16) angebrachte Komponente (51) als auch eine an dem Melkbecherhalter (20) angebrachte Komponente (52) umfasst, wobei das Magnetmittel (50) dazu ausgelegt ist, eine Magnetkraft auszuüben, um den Melkbecherhalter (20) in der Befestigungsstellung in Bezug auf den Rahmen (10, 14, 15, 16) zu fixieren.

2. Melkvorrichtung (1) nach Anspruch 1, wobei wenigstens eine der Komponenten (51, 52) des Magnetmittels (50) einen Permanentmagneten umfasst.

3. Melkvorrichtung (1) nach Anspruch 2, wobei die Rückführvorrichtung dazu ausgelegt ist, über das Rückführmittel (33) eine Kraft auf den Melkbecherhalter (20) auszuüben, die groß genug ist, um die Magnetkraft zu überwinden, die den Melkbecherhalter (20) in seiner Stellung fixiert.

4. Melkvorrichtung (1) nach Anspruch 1, wobei wenigstens eine der Komponenten (51, 52) des Magnetmittels (50) einen Elektromagneten umfasst.

5. Melkvorrichtung (1) nach Anspruch 4, die eine Steuervorrichtung zum Steuern eines Zustands des Elektromagneten umfasst, wobei die Steuervorrichtung dazu ausgelegt ist, eine Erregung des Elektromagneten rückgängig zu machen, wenn über das Rückführmittel (33) eine Kraft auf den Melkbecherhalter (20) ausgeübt wird, während sich der Melkbecher (30) in dem Melkbecherhalter (20) befindet und sich der Melkbecherhalter (20) in der Befestigungsstellung befindet.

6. Melkvorrichtung (1) nach einem der Ansprüche 1 bis 5, wobei wenigstens eine der Komponenten (51, 52) des Magnetmittels (50) eine selbstausrichtende Auslegung aufweist.

7. Melkvorrichtung (1) nach einem der Ansprüche 1 bis 6, wobei Seiten der Komponenten (51, 52) des Magnetmittels (50), die einander in der Befestigungsstellung des Melkbecherhalters (20) zugewandt sind, wenigstens zum Teil mit einem Relief versehen sind, und wobei das Relief auf der Seite der einen Komponente (51) komplementär zu dem Relief auf der Seite der anderen Komponente (52) ist.

8. Melkvorrichtung (1) nach einem der Ansprüche 1 bis 7, die eine einzelne Gelenkverbindung (22) umfasst, um die der Melkbecherhalter (20) in Bezug auf den Rahmen (10, 14, 15, 16) kippbar ist.

9. Melkvorrichtung (1) nach einem der Ansprüche 1 bis 8, das ein den Melkbecherhalter positionierendes Mittel (21, 24) umfasst, das an den Melkbecherhalter (20) und den Rahmen (10, 14, 15, 16) gekoppelt ist, um eine Kraft auf den Melkbecherhalter (20) auszuüben, die darauf ausgerichtet ist, den Melkbecherhalter (20) aus der gekippten Ruhestellung in die Befestigungsstellung zurückzuführen.

10. Melkvorrichtung (1) nach Anspruch 9, wobei das den Melkbecherhalter positionierende Mittel ein Federmittel (21, 24) umfasst.

11. Melkvorrichtung (1) nach Anspruch 10, wobei das Federmittel eine Komponente (24) umfasst, die aus einem flexiblen Werkstoff hergestellt ist.

## Revendications

1. Dispositif de traite (1), comprenant :
un cadre (10, 14, 15, 16) monté avec au moins un porte-gobelet-trayeur (20) muni d'un gobelet-trayeur (30) mobile dans une direction opposée au porte-gobelet-trayeur (20) ; et
un dispositif de rappel comportant un moyen de rappel (33) relié au gobelet-trayeur (30) et conçu pour provoquer le rappel du gobelet-trayeur (30) vers le porte-gobelet-trayeur (20) depuis une position dans laquelle il a été déplacé à l'opposé du porte-gobelet-trayeur (20),
le porte-gobelet-trayeur (20) étant inclinable par rapport au cadre (10, 14, 15, 16) entre une position d'accrochage pour retenir le gobelet-trayeur (30) dans une orientation fonctionnelle en vue de son accrochage à un trayon d'un animal à traire, et une position de repos inclinée, et
le dispositif de rappel étant conçu pour exercer une force sur le porte-gobelet-trayeur (20) par l'intermédiaire du moyen de rappel (33) afin d'incliner le porte-gobelet-trayeur (20), et
le dispositif de traite (1) comprenant en outre un moyen aimant (50) comprenant un composant (51) monté sur le cadre (10, 14, 15, 16) ainsi qu'un composant (52) monté sur le porte-gobelet-trayeur (20), ledit moyen aimant (50) étant conçu pour exercer une force magnétique afin de fixer le porte-gobelet-trayeur (20) dans la position d'accrochage par rapport au cadre (10, 14, 15, 16).

2. Dispositif de traite (1) selon la revendication 1, dans lequel au moins un des composants (51, 52) du moyen aimant (50) comprend un aimant permanent.

3. Dispositif de traite (1) selon la revendication 2, dans lequel le dispositif de rappel est conçu pour exercer sur le porte-gobelet-trayeur (20), par l'intermédiaire du moyen de rappel (33), une force suffisamment importante pour contrer la force magnétique retenant le porte-gobelet-trayeur (20) en position.

4. Dispositif de traite (1) selon la revendication 1, dans lequel au moins un des composants (51, 52) du moyen aimant (50) comprend un électroaimant.

5. Dispositif de traite (1) selon la revendication 4, comprenant un dispositif de contrôle permettant de contrôler un état de l'électroaimant, le dispositif de contrôle étant conçu pour annuler une excitation de l'électroaimant quand une force est exercée sur le porte-gobelet-trayeur (20) par l'intermédiaire du moyen de rappel (33) pendant que le gobelet-trayeur (30) est situé dans le porte-gobelet-trayeur (20) et le porte-gobelet-trayeur (20) est dans la position d'accrochage.

6. Dispositif de traite (1) selon l'une quelconque des revendications 1 à 5, dans lequel au moins un des composants (51, 52) du moyen aimant (50) a une configuration d'auto-alignement.

7. Dispositif de traite (1) selon l'une quelconque des revendications 1 à 6, dans lequel des côtés des composants (51, 52) du moyen aimant (50), qui sont l'un en face de l'autre dans la position d'accrochage du porte-gobelet-trayeur (20), sont au moins en partie munis d'un relief, le relief sur le côté d'un composant (51) étant complémentaire du relief sur le côté de l'autre composant (52).

8. Dispositif de traite (1) selon l'une quelconque des revendications 1 à 7, comprenant une unique articulation (22) par rapport à laquelle le porte-gobelet-trayeur (20) est inclinable par rapport au cadre (10, 14, 15, 16) .

9. Dispositif de traite (1) selon l'une quelconque des revendications 1 à 8, comprenant un moyen de positionnement de porte-gobelet-trayeur (21, 24) accouplé au porte-gobelet-trayeur (20) et au cadre (10, 14, 15, 16) afin d'exercer une force sur le porte-gobelet-trayeur (20) dans le but de rappeler le porte-gobelet-trayeur (20) de la position de repos inclinée à la position d'accrochage.

10. Dispositif de traite (1) selon la revendication 9, dans lequel le moyen de positionnement de porte-gobelet-trayeur comprend un moyen ressort (21, 24).

11. Dispositif de traite (1) selon la revendication 10, dans lequel le moyen ressort comprend un composant (24) constitué d'un matériau flexible.
